# EUROPEAN PATENT SPECIFICATION

(11) **EP 3 782 871 B1**
(45) Date of publication and mention of the grant of the patent: **06.03.2024**
(21) Application number: 19787860.6
(22) Date of filing: 19.04.2019
(51) Int. Cl.: B61L 23/04, G06T 7/73, B61L 25/02

(54) **TRAJECTORY DISCRIMINATION DEVICE**
TRAJEKTORIEUNTERSCHEIDUNGSVORRICHTUNG
DISPOSITIF DE DISCRIMINATION DE TRAJECTOIRE

(30) Priority: 20.04.2018 JP 2018081586
(43) Date of publication of application: 24.02.2021
(73) Proprietor: KABUSHIKI KAISHA TOSHIBA, Minato-ku Tokyo 105-0023 (JP); TOSHIBA INFRASTRUCTURE SYSTEMS & SOLUTIONS CORPORATION, Saiwai-ku Kawasaki-shi Kanagawa 212-0013 (JP)
(72) Inventor: FUTAGAMI, Takuya, Tokyo 105-8001 (JP); TAKAHASHI, Yusuke, Tokyo 105-8001 (JP); KOBAYASHI, Hiroyuki, Tokyo 105-8001 (JP); HORIE, Masahiro, Tokyo 105-8001 (JP); SETO, Naoto, Tokyo 105-8001 (JP); HATTORI, Yohei, Kawasaki-shi, Kanagawa 212-0013 (JP); FUJIURA, Kazuo, Kawasaki-shi, Kanagawa 212-0013 (JP); YAMASAKI, Yoshiaki, Tokyo 105-8001 (JP); ITO, Hiroaki, Kawasaki-shi, Kanagawa 212-0013 (JP)
(74) Representative: Hoffmann Eitle
(86) International application number: PCT/JP2019/016859
(87) International publication number: WO 2019/203354

(56) References cited:
- EP-B1- 2 993 105
- DE-A1-102014 220 778
- JP-A- 2002 008 019
- JP-A- 2017 147 482
- CORSINO ESPINO JORGE ET AL: "Rail and turnout detection using gradient information and template matching", 2013 IEEE INTERNATIONAL CONFERENCE ON INTELLIGENT RAIL TRANSPORTATION PROCEEDINGS, IEEE, 30 August 2013 (2013-08-30), pages 233-238, XP032547280, DOI: 10.1109/ICIRT.2013.6696299 ISBN: 978-1-4673-5278-9 [retrieved on 2013-12-26]

## Description

### FIELD

Embodiments described herein relate generally to railway track identification devices.

### BACKGROUND

Conventionally, for inspecting a railway track or detecting an obstruction (a remarkable object) on the railway track during driving of a railway vehicle, various techniques have been considered, in which a railway track (or a region where the railway track is seen) is detected from a captured image acquired by capturing an image of a region lying in a traveling direction of the railway vehicle.
EP 2 993 105 B1 describes optical route examination systems and methods obtaining image data of a field of view of a camera disposed onboard a first vehicle as the first vehicle moves along a first route, and autonomously examine the image data onboard the first vehicle to identify one or more of a feature of interest or a designated object.
DE 10 2014 220 778 A1 describes a method for monitoring track sections and a camera system for carrying out the method. The method uses a camera system to detect switches and the position of the switches.
Corsino Espino Jorge et al "Rail and turnout detection using gradient information and template matching" describes rail and turnout detection using gradient information and template matching.
JP 2002 008 019 A describes a point detection part inputting the distance image from a distance image generation part, the information concerning the directional image from a rail candidate point extraction part, and the information concerning the lateral own car traveling rails detected by a rail detection part, detects a lead part as straight line on the basis of rail candidate points within a retrieval window set in order from this side between the right and left own traveling rails, detects a point on the basis of the intersection of the lead part with the own traveling rails and detects the distance to the point on the basis of the distance image.

### BRIEF DESCRIPTION OF DRAWINGS

FIG. 1 is an exemplary schematic view illustrating a configuration of a vehicle system including a railway track identification device according to a first embodiment.
FIG. 2 is an exemplary schematic block diagram illustrating functionality of the vehicle system including the railway track identification device according to the first embodiment.
FIG. 3 is an exemplary schematic view illustrating an initial area to be set for detecting a railway track, in the first embodiment.
FIG. 4 is an exemplary schematic view for explaining an example of detecting, on the basis of a railway track detected in the initial area, (a part of) the railway track from each of subsequent areas of the initial area, in the first embodiment.
FIG. 5 is an exemplary schematic view of a fan-shaped search region used to detect (a part of) the railway track from each of the subsequent areas of the initial area, in the first embodiment.
FIG. 6 is an exemplary schematic view for explaining a method of using a fan-shaped search region to search for (a part of) a railway track, in the first embodiment.
FIG. 7 is an exemplary schematic view for explaining a fan-shaped search region when searching for a branch position of a branch track, in the first embodiment.
FIG. 8 is an exemplary schematic view for explaining a state where a line segment intersecting a railway track being previously detected is detected, in the first embodiment.
FIG. 9 is an exemplary schematic view for explaining an example of setting a search range for a branch track serving as a search target, on the basis of the line segment being detected, in the first embodiment.
FIG. 10 is an exemplary schematic view for further describing adding a search margin to the search range being set in FIG. 9 for a branch track, in the first embodiment.
FIG. 11 is an exemplary schematic view for explaining how a fan-shaped search region is used to search for a branch track in the search area being set for a branch track, in the first embodiment.
FIG. 12 is an exemplary schematic view for explaining, to use Hough transform to detect a branch track, a search area for a branch track, which is set on the basis of the search margin set in FIG. 10, in the first embodiment.
FIG. 13 is an exemplary schematic flowchart illustrating a flow of processing of detecting a railway track and detecting an obstruction, in the first embodiment.
FIG. 14 is an exemplary flowchart illustrating in detail a flow of processing of acquiring a position of a railway track, at S102 in the flowchart in FIG. 13.
FIG. 15 is an exemplary flowchart illustrating in detail a flow of processing of searching for a branch position of a railway track, at S126 in the flowchart in FIG. 14.
FIG. 16 is an exemplary schematic block diagram illustrating functionality of a vehicle system including a railway track identification device according to a second embodiment.
FIG. 17A is an exemplary schematic view for explaining branch information utilized in the railway track identification device according to the second embodiment.
FIG. 17B is an exemplary view for explaining the branch information used in the railway track identification device according to the second embodiment.
FIG. 18 is an exemplary flowchart illustrating a flow of processing of detecting a railway track and detecting an obstruction, in the second embodiment.

### DETAILED DESCRIPTION

The above problem is solved by the subject matter of the independent claim 1 that defines the invention. Examples and technical descriptions of apparatuses, products and/or methods in the description and/or drawings which are not covered by the claims are presented not as embodiments of the invention but as background art or examples useful for understanding the invention. A railway track identification device according to the invention includes an image acquisition unit, a railway track detection unit, a branch track detection unit, and a railway track detection result output unit. The image acquisition unit acquires a captured image acquired by capturing an image of a region lying in a traveling direction of a railway vehicle. The railway track detection unit detects, for each of a plurality of groups of pixels in the captured image, a railway track on a basis of a feature, the feature being based on a predetermined standard and being possible to be a criterion representing similarity to a railway track. The branch track detection unit detects whether there is a branch track branching off from the railway track being detected. The railway track detection result output unit outputs the results of the detection obtained from the railway track detection unit and the branch track detection unit.

Embodiments will now be described hereinbelow with reference to the accompanying drawings. Configurations of the embodiments described below, and actions and results (effects) brought by the configurations are mere examples. The present invention is thus not limited to contents described below.

### <First Embodiment>

A configuration of a first embodiment will first be described.

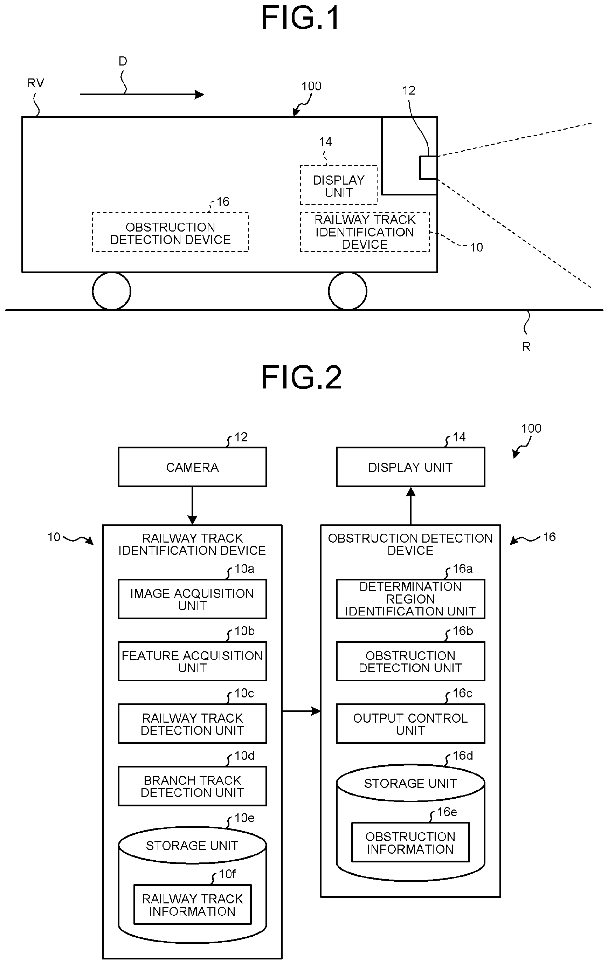

FIG. 1 is an exemplary schematic view illustrating a configuration of a vehicle system 100 including a railway track identification device 10 according to the first embodiment. As illustrated in FIG. 1, the vehicle system 100 is mounted on a railway vehicle RV that travels, in a direction D, on a railway track R including a pair of rails.

As illustrated in FIG. 1, the vehicle system 100 further includes, in addition to the railway track identification device 10, a camera 12 serving as an imaging unit, a display unit 14, and an obstruction detection device 16.

The camera 12 is provided at an end (for example, a driver's seat) of the railway vehicle RV to capture an image of a region lying in a traveling direction of the railway vehicle RV. In a captured image acquired by the camera 12, the railway track R is photographed.

The display unit 14 represents a device that displays each of various images. The display unit 14 is provided at or around the driver's seat of the railway vehicle RV, for example.

The railway track identification device 10 is, for example, a computer including hardware such as a processor and a memory.

By the way, conventionally, for inspecting the railway track R and detecting an obstruction (a remarkable object) on the railway track R during traveling of the railway vehicle RV, various techniques, in which the railway track R (or a region where the railway track R is seen) is detected from a captured image acquired by capturing an image of a region lying in the traveling direction of the railway vehicle RV, have been considered. In the conventional technique, it has been required to more accurately detect the railway track R from a captured image. In a case where there is a branch track branching off from a railway track on which the railway vehicle RV is traveling, it is possible to acquire more practicable system through accurately detecting the branch track from a captured image.

To this end, the first embodiment achieves, by allowing the railway track identification device 10 to have such functionality as described below to detect a branch position and a branch track from a captured image, more accurately detecting the railway track R serving as a branch destination, on which the vehicle itself (the railway vehicle RV) should travel.

FIG. 2 is an exemplary schematic block diagram illustrating functionality of the railway track identification device 10 and the obstruction detection device 16 according to the first embodiment. As illustrated in FIG. 2, the railway track identification device 10 includes an image acquisition unit 10a, a feature acquisition unit 10b, a railway track detection unit 10c, a branch track detection unit 10d (a branch detection unit), and a storage unit 10e, for example. The obstruction-detection device 16 includes a determination region identification unit 16a, an obstruction detection unit 16b, an output control unit 16c, and a storage unit 16d, for example.

A group of functional modules including the image acquisition unit 10a, the feature acquisition unit 10b, the railway track detection unit 10c, and the branch track detection unit 10d is partially or wholly implemented by collaboration between hardware and software. More specifically, each of the functional modules is implemented by that the processor in the railway track identification device 10 reads and executes a computer program stored in the memory such as the storage unit 10e. Similarly, a group of functional modules including the determination region identification unit 16a, the obstruction detection unit 16b, and the output control unit 16c is partially or wholly implemented by collaboration between hardware and software. More specifically, as a processor in the obstruction detection device 16 reads and executes a computer program stored in a memory such as the storage unit 16d, each of the functional modules is implemented. Note that, in the first embodiment, the group of functional modules may be partially or wholly implemented with dedicated hardware (a circuit).

The storage unit 10e in the railway track identification device 10 and the storage unit 16d in the obstruction detection device 16 are each implemented with a volatile or non-volatile storage medium of various types including memories. The storage unit 10e stores the computer program described above that is executed by the processor of the railway track identification device 10, and railway track information 10f (including, for example, information of detected railway tracks, information of widths of railway tracks, information of initial areas, and information of positions of railway tracks) used to detect the railway track R in accordance with the computer program. The storage unit 16d stores the computer program described above that the processor of the obstruction detection device 16 executes, and obstruction information 16e (including, for example, information of shapes of obstructions that are possibly present on a railway track (information of objects that need to be watched), such as persons, animals, fallen trees, and vehicles) used to detect an obstruction in accordance with the computer program.

In the present embodiment, the railway track R is to be detected, for each of a plurality of groups of pixels (search areas) in an image captured by the camera 12, on the basis of a feature based on a predetermined standard. The feature can be a criterion representing similarity to a railway track.

The image acquisition unit 10a acquires a captured image captured by the camera 12. The captured image is, for example, a color image. The image acquisition unit 10a can perform viewpoint conversion processing, for example, on the acquired, captured image to generate a bird's-eye view image from which a region captured by the camera 12 can be seen in a panoramic manner from above.

The feature acquisition unit 10b acquires a feature to be focused on for accurately detecting the railway track R, in accordance with a situation such as an imaging environment where an image (a bird's-eye view image) is to be captured, or a part of the railway track R serving as a detection target.

Appearance of the railway track R in a captured image varies depending on an imaging environment (for example, brightness in a peripheral region). For example, there is a case where a region corresponding to the railway track R is photographed brighter than a peripheral region. In such a case, it can be deemed that the image has been acquired in such an imaging environment where the railway track R easily reflects light. In such a case, for example, such a method is effective that a brightness value itself is focused on as a feature to detect the railway track R. Since the region corresponding to the railway track R has been photographed relatively brighter than other regions, acquiring feature data acquired by dividing (binarizing) a whole image prepared as a bird's-eye view image into: regions where a brightness value is equal to or above a threshold value; and regions where a brightness value is below the threshold value allows the region corresponding to the railway track R to be accurately detected. In this case, the method is useful because a single target is to be focused on as a feature, achieving robustness against noise, as well as achieving easy application to a railway track detection algorithm that utilizes an already-existing line segment detection algorithm such as Hough transform and random sample consensus (RANSAC).

On the other hand, a region corresponding to the railway track R might be photographed darker than a peripheral region. In such a case, it can be deemed that the image has been acquired in such an imaging environment where the railway track R rarely reflects light. In this case, such a method is effective that a gradient of brightness values (a difference in brightness value between a pixel to be focused on and a pixel adjacent to the pixel to be focused on) is focused on as a feature to detect the railway track R. Note that a gradient of brightness values can be calculated with a SOBEL filter, a Laplacian filter, a Robinson filter, or a Canny filter, for example.

By the way, since the railway track R often extends, in a viewpoint of the camera 12, from a near side to a far side, a gradient in a direction along a horizontal axis (an x axis) of brightness values is normally focused on as a feature. On the other hand, in a case where regions corresponding to the railway track R render a curve at a middle point from the near side to the far side, in the viewpoint of the camera 12, a gradient in a direction along a vertical axis (a y axis) of brightness values becomes greater, in regions on the far side, than a gradient in the direction along the horizontal axis of brightness value. To this end, in such an imaging environment where a region corresponding to the railway track R is photographed darker than a peripheral region, such a method is effective that both of a gradient in the direction along the horizontal axis and a gradient in the direction along the vertical axis of brightness values are focused on as features, and the gradients one of which is to be focused on are switched in accordance with an area (a group of pixels) serving as a detection target to acquire feature data. The method is useful because, even though an increase in number of targets to be focused on as features possibly increases noise, the railway track R that is curving can still be appropriately detected in accordance with a direction in which the railway track R is extending.

As described above, a feature that should be focused on to accurately detect the railway track R variously varies depending on a situation such as an imaging environment where an image (a bird's-eye view image) is to be captured, and a part of the railway track R serving as a detection target. Therefore, to accurately detect the railway track R from any kinds of captured images (bird's-eye view images), it is sufficient that a feature used to detect the railway track R be appropriately switched in accordance with a situation.

The feature acquisition unit 10b acquires, for each of a plurality of groups of pixels (areas) that a bird's-eye view image generated by the image acquisition unit 10a is divided in the y axis direction (the far side and an upper side of the image), on the basis of a predetermined standard, one of a plurality of features used to detect the railway track R, which can be a criterion representing similarity to a railway track. Then, from each of the areas, feature data based on the one acquired feature is acquired.

The railway track detection unit 10c detects the railway track R from the captured image (the bird's-eye view image) on the basis of the feature data acquired by the feature acquisition unit 10b.

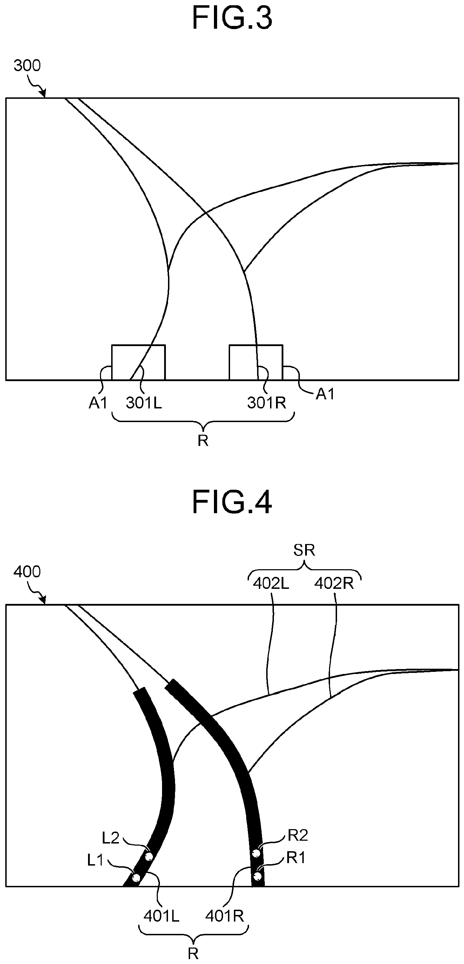

The railway track detection unit 10c sequentially repeats, as illustrated in FIG. 3, after a part of the railway track R (a rail 301L and a rail 301R) has been detected from an initial area A1 serving as a first detection target, among the groups of pixels (areas) included in an image 300, processing of further detecting another part of the railway track R from a next area based on the part of the railway track R, which has been detected, to detect the railway track R from the whole captured image (the bird's-eye view image). Then, the feature acquisition unit 10b uses, each time the railway track detection unit 10c detects a part of the railway track R, as the predetermined standard described above, at least information regarding the part of the railway track R, which is already detected by the railway track detection unit 10c, to acquire one feature corresponding to the next area. Note that, in FIG. 3 and other drawings, a captured image is used to describe an outline of the present embodiment, for ease of understanding. Note that, even when a captured image is converted into a bird's-eye view image to detect a railway track, converting again an acquired position of a railway track into a position on the original, captured image allows to acquire an image from which a railway track is to be detected, similar to FIG. 3 and other drawings.

The feature acquisition unit 10b selects one feature corresponding to the next area by using, as the predetermined standard described above, an image statistics amount regarding brightness in a captured image (a bird's-eye view image) corresponding to the part of the railway track R, which is already detected by the railway track detection unit 10c. The image statistics amount regarding brightness refers to, for example, an average brightness value. Focusing on the average brightness value of the part of the railway track R, which is already detected, it is possible to determine whether a bird's-eye view image as a processing target is based on a captured image acquired in an imaging environment where the railway track R easily reflects light or based on a captured image acquired in an imaging environment where the railway track R rarely reflects light.

For example, it can be said that, in a case where an average brightness value in an image in which a part of the railway track R, which is already detected, is captured is equal to or above a threshold value, a region corresponding to the part of the railway track R be photographed brighter than other regions in the captured image (the bird's-eye view image). In such a case, as described above, it is effective that a brightness value itself be focused on as a feature corresponding to a next area. On the other hand, it can be said that, in a case where an average brightness value in an image in which a part of the railway track R, which is already detected, is captured is below the threshold value, a region corresponding to the part of the railway track R be photographed darker than other regions in the captured image (the bird's-eye view image). In such a case, it is effective, as described above, that a gradient of brightness values be focused on as a feature corresponding to a next area. Therefore, the feature acquisition unit 10b determines which of a brightness value itself and a gradient of brightness values should be selected as a feature in a next area, in accordance with a magnitude relation between an average brightness value in an image in which a part of the railway track R, which is already detected, is captured and the threshold value.

Note that, as described above, there are two gradients of brightness values, each serving as a feature, which are a gradient in the direction along the horizontal axis and a gradient in the direction along the vertical axis. One of the two gradients is determined as being appropriate, depending on whether the railway track R is curved, for example. To this end, the feature acquisition unit 10b determines, on the basis of an angle of a part of the railway track R, which is already detected by the railway track detection unit 10c, (a direction in which the part of the railway track R extends), which of a gradient in the direction along the horizontal axis of brightness values and a gradient in the direction along the vertical axis of brightness values should be selected as one feature used to detect another part of the railway track R from a next area.

By the way, since the initial area A1 represents an area serving as a first detection target, no such immediately previous result that should be referred to, as described above, is present. Therefore, to detect a part of the railway track R from the initial area A1, a past (for example, one frame previous) result of detection of the railway track R from a captured image (a bird's-eye view image) is used. That is, the image acquisition unit 10a acquires captured images a plurality of times, as the railway vehicle RV travels. Then, the feature acquisition unit 10b uses, to select one feature corresponding to the initial area A1 in a captured image (a bird's-eye view image) acquired at one timing, the predetermined standard for selecting the one feature. In this case, the predetermined standard refers to at least information regarding a part of the railway track R, which is detected from the initial area A1 in a bird's-eye view image acquired at an earlier timing than the one timing (in a bird's-eye view image based on a one-frame-previous captured image) (for example, an image statistics amount such as an average brightness value described above). Note that it is regarded that information regarding the railway track R detected on the basis of a one-frame-previous captured image is stored, as the railway track information 10f, in the storage unit 10e.

Methods of detecting (a part of) the railway track R from each of areas in a captured image (a bird's-eye view image) will be described herein. A method of detecting (a part of) the railway track R from the initial area A1 will first be described. As described above, the initial area A1 is set at a position determined beforehand, as a region serving as a starting point for detecting the railway track R. The position of the initial area A1 is stored beforehand, as the railway track information 10f, in the storage unit 10e. The railway track detection unit 10c first refers to the railway track information 10f in the storage unit 10e to extract data of a region corresponding to the initial area A1 from feature data acquired on the basis of a feature selected with the method described above. Then, the railway track detection unit 10c executes processing, on the basis of a line segment detection algorithm such as Hough transform or RANSAC, on the extracted data to extract candidates of (a part of) the railway track R, which is present in the initial area A1. Note that a width between the pair of rails 301L and 301R configuring the railway track R that is regarded as regular is specified beforehand. Therefore, acquiring information regarding the width between the pair of rails 301L and 301R configuring the railway track R that is regarded as regular allows to identify (a part of) the railway track R that is regarded as regular from the candidates extracted as described above. To this end, in the present embodiment, the width between the pair of rails 301L and 301R configuring the railway track R may be stored beforehand, as the railway track information 10f, in the storage unit 10e.

Then, the railway track detection unit 10c refers to a width of a railway track, which is presented in the railway track information 10f, and further extracts, from the candidates extracted as described above, candidates each having a width that matches with the width of the railway track, which is presented in the railway track information 10f, to identify (detect) the railway track R that is regarded as regular. Then, the railway track detection unit 10c causes the storage unit 10e to store, as information of positions of railway tracks, a plurality of coordinate points configuring the railway track R that has been identified. For example, in the example illustrated in FIG. 4, coordinate points L1, R1, L2, and R2 lying on the railway track R (rails 401L and 401R) are stored in the storage unit 10e.

Next, a method of detecting (a part of) the railway track R from areas subsequent from the initial area A1 will be described.

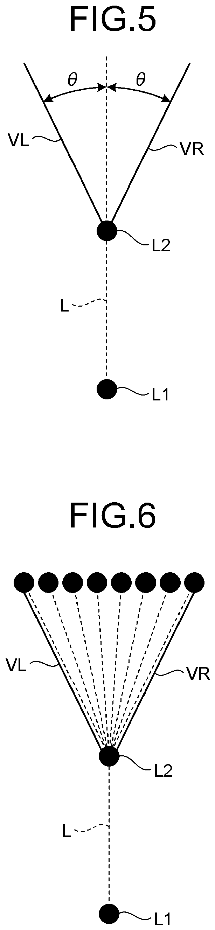

FIGS. 5 and 6 are exemplary schematic views for explaining an outline of the method of detecting (a part of) the railway track R from areas subsequent from the initial area A1. In the example illustrated in FIG. 5, it is regarded that the coordinate points L1 and L2 are detected as parts of the railway track R through immediately previous processing. The railway track detection unit 10c first sets, as illustrated in FIG. 5, a predetermined fan-shaped region on the basis of the two coordinate points being detected most recently. The fan-shaped region refers to a region partitioned by a virtual line VR and a virtual line VL both extending from the coordinate point L2 lying opposite in position to the initial area A1, among the two coordinate points L1 and L2 being detected most recently, and respectively expanding rightward and leftward each identically at an angle θ around a straight line L coupling the two coordinate points L1 and L2. Note that the angle θ represents an angle set beforehand, as well as represents an angle whose range covers a range having a maximum curvature specified in standards for the railway track R, for example. Each of lengths of the virtual line VR and the virtual line VL corresponds a length set beforehand.

With the fan-shaped region that is set as described above, the railway track detection unit 10c sets, as illustrated in FIG. 6, a plurality of line segments comprehensively coupling desired locations on an upper end of the fan-shaped region and the coordinate point L2 serving as a starting point (a pivot) of the fan-shaped region. The line segments are regarded as candidates of (a part of) the railway track R.

Then, the railway track detection unit 10c applies the candidates being set as described above on a bird's-eye view image, and identifies (detects), from among the candidates, one where a feature selected by the feature acquisition unit 10b corresponds to a largest average value, as (a part of) the railway track R that is regarded as regular.

By the way, the two coordinate points illustrated in FIG. 5 are ones lying along one of the pair of rails 301L and 301R configuring the railway track R, for example, the rail 301L. Two coordinate points actually lying along the other rail 301R are already detected. Therefore, the railway track detection unit 10c identifies (detects) the other rail 301R, as the railway track R that is regarded as regular, with a method similar to the method described above.

The railway track detection unit 10c wholly detects, as the procedure described above is sequentially repeated, the railway track R (the rails 401L and 401R) from all regions of an image 400 (a captured image; a bird's-eye view image) illustrated in FIG. 4. Then, information regarding (whole of) the railway track R being detected is stored, as information of detected railway tracks, in the storage unit 10e. Note that, as the method of detecting the railway track R, such an example has been described above that, as illustrated in FIG. 6, sets a plurality of line segments (candidates of railway track, which are illustrated as straight lines) in a fan-shaped region, and identifies, as (a part of) the railway track R that is regarded as regular, one where a feature corresponds to a largest average value. In another example, a plurality of candidates of railway track, which are illustrated as parabolic lines, may be set in a fan-shaped region to identify, as (a part of) the railway track R that is regarded as regular, one where a feature corresponds to a largest average value. In this case, a search for the railway track R is to be executed among candidates of railway track, each of which has a shape more similar to a shape of the actual railway track R. As a result, the railway track R can more accurately be detected. On the other hand, setting line segments (straight lines) as candidates of railway track to execute a search, as described above, can contribute to reduced processing burdens and a shortened processing time, for example.

Now back to FIG. 2, the branch track detection unit 10d detects whether there is a branch track branching off from the railway track R detected by the railway track detection unit 10c. For example, the railway track detection unit 10c divides a captured image (a bird's-eye view image) into a plurality of areas from the near side toward the far side, and identifies (detects), for each of the areas, a feature corresponding to a largest average value, as (a part of) a regular track R. As a result, in a case where a branch track SR (a rail 402L and a rail 402R) is present at a middle point of the railway track R, as illustrated in FIG. 4, the branch track SR cannot sometimes be detected if a position from which the branch starts and a position at which the area is divided do not match with each other.

To this end, the branch track detection unit 10d identifies the branch position of the branch track SR on the railway track R being detected, and further detects, on the basis of the branch position, the branch track SR extending from the branch position.

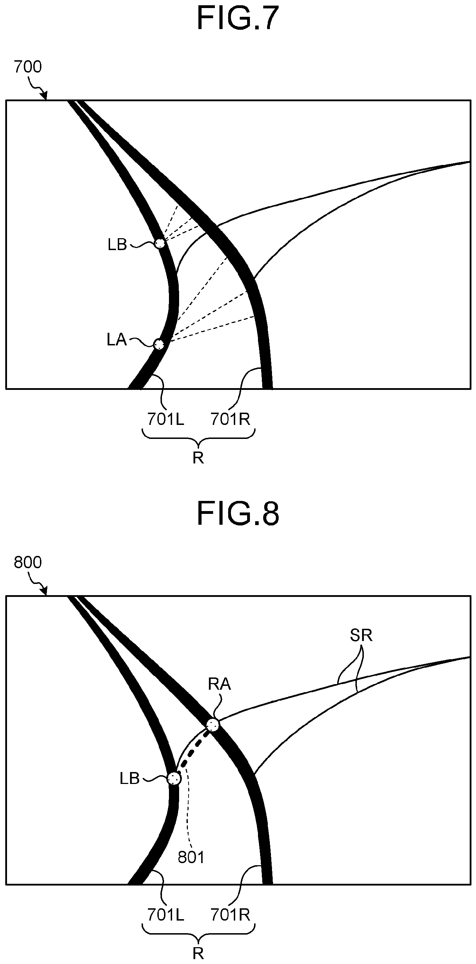

The branch track detection unit 10d sets, as illustrated in FIG. 7, a fan-shaped search region that is similar to the fan-shaped region (the search region) described in FIG. 6, around a point (for example, feature data such as a coordinate point LA and a coordinate point LB) that is included in an image 700, and that configures the railway track R detected by the railway track detection unit 10c. In FIG. 7, an example of setting a search region for one of a pair of a rail 701L and a rail 701R, that is, the rail 701L is illustrated. Then, it is determined whether there is a line segment coupling the railway track R (the pair of rails 701L and 701R) in a group of line segments (candidates of branch track) included in the fan-shaped search region (crossing line segments and intersecting line segments). For example, a line segment where an average value of features is equal to or above a certain value is to be detected. Note that, in this case, as an average value of features, which is equal to or above the certain value, an average value of features of the railway track R detected by the railway track detection unit 10c can be used.

FIG. 8 illustrates a state where, as a result of a search for line segments (candidates of branch track) in a fan-shaped search region, a (crossing) line segment 801 (a line segment LB-RA) coupling the railway track R (the rail 701L and the rail 701R) is detected. In an example of FIG. 8, the line segment 801 is detected when a fan-shaped search region is set by using the coordinate point LB on the rail 701L as a base point for search. The branch track detection unit 10d acquires the line segment 801, that is, an intersection between the branch track SR and the railway track R detected by the railway track detection unit 10c, as a branch position of the branch track SR. Then, the branch track detection unit 10d can accurately execute a search for the branch track SR, on the basis of the branch position. Note that, in another example, a plurality of candidates of branch track, which are illustrated as parabolic lines, may be set in a fan-shaped region to regard one where a feature corresponds to a largest average value as (a part of) the branch track SR coupling (crossing) the railway track R (the rail 701L and the rail 701R). In this case, a search for the branch track SR is executed among candidates of branch track, each of which has a shape more similar to a shape of an actual branch track. As a result, (a part of) the branch track SR can more accurately be detected. On the other hand, setting line segments (straight lines) as candidates of branch track to execute a search, as described above, can contribute to reduced processing burdens and a shortened processing time, for example.

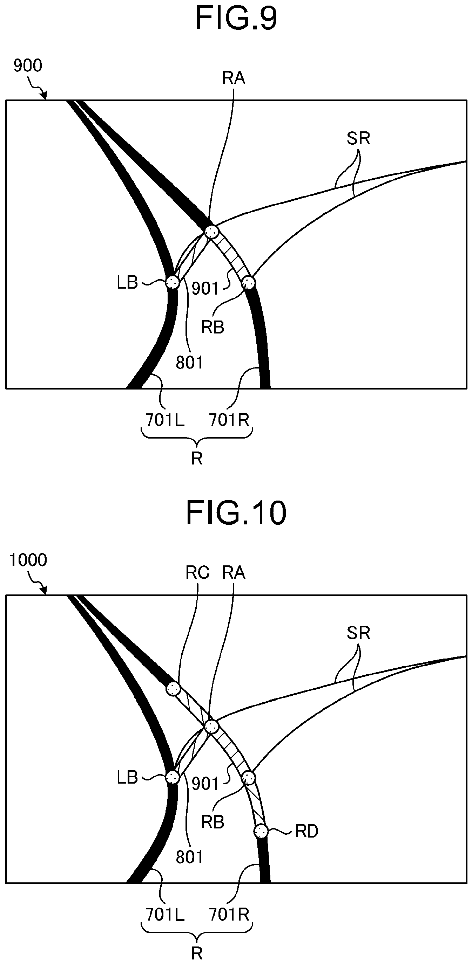

The branch track detection unit 10d sets a new search region to search for the branch track SR on the basis of an intersection (in FIG. 8, a coordinate point RA) that is present on the far side (the upper side of an image 800), among intersections between the line segment 801 being detected and the railway track R. In this case, the branch track detection unit 10d first utilizes, as illustrated in an image 900 in FIG. 9, a length of the line segment 801 (the line segment LB-RA) to set a line segment 901 having the same length, in a direction in which the rail 701R being detected by the railway track detection unit 10c extends. In this case, as illustrated in FIG. 9 and other drawings, as for the branch track SR to be searched for, due to its nature, one of rails of the branch track SR crosses the railway track R, but another one of the rails does not cross the railway track R. Therefore, the other one of the rails of the branch track SR, which does not cross the railway track R, is present on the near side of the image 900, that is, closer than the one of the rails of the branch track SR, which crosses the railway track R. Therefore, the line segment 901 defining the search region is set to extend, from the coordinate point RA, along the rail 701R, to the near side of the image 900. Then, an end of the line segment 901 is designated as a coordinate point RB.

Furthermore, as illustrated in an image 1000 in FIG. 10, in order to expand the search range on the far side by an amount corresponding to a predetermined length (for example, 1/2 of a length of) of the line segment 901, the branch track detection unit 10d sets a coordinate point RC from a position of the coordinate point RA along the rail 701R detected by the railway track detection unit 10c, toward the far side (the upper side of the image 1000) so as to add a margin to the search range for the branch track SR. Similarly, a coordinate point RD is set, from a position of the coordinate point RB toward the near side (a lower side of the image 1000) along the rail 701R so as to expand the search range on the near side by an amount corresponding to the predetermined length (for example, 1/2 of the length of) of the line segment 901. That is, a line segment RC-RD is defined as a search range for the branch track SR.

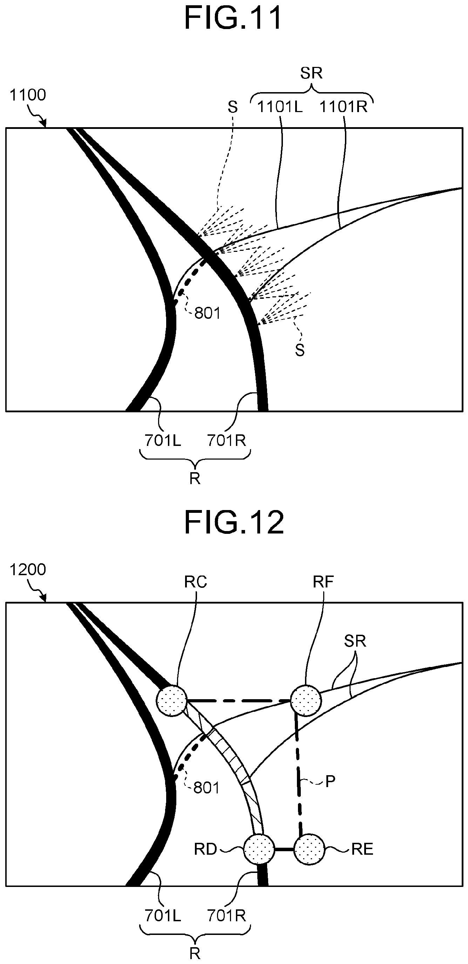

Upon determination of the search range (the line segment RC-RD) for the branch track SR, the branch track detection unit 10d sets, as illustrated in an image 1100 in FIG. 11, fan-shaped search regions S each similar to the fan-shaped region (the search region) described with reference to FIG. 6. That is, the branch track detection unit 10d can use, as a pivot, a branch position of the branch track SR to set each of the fan-shaped search regions S to detect a part of the branch track SR (rails 1101R and 110 1L). Then, on a group of line segments (candidates of branch track) included in each of the fan-shaped search regions S, a line segment where an average value of features is equal to or above the certain value is detected. In this case, an angle (see θ in FIG. 5) of each of the fan-shaped search regions S for the branch track SR, in which the detected branch position serves as the starting point, can be set to be an angle covering a range of a maximum curvature that the branch track SR, which is specified for the branch track SR, is able to take on the basis of (around) the line segment 801 (an angle and a posture of the line segment 801). In this case, a search limited in a direction in which the target branch track SR to be searched for can be present becomes possible, efficiently detecting the branch track SR. When detecting the branch track SR on the basis of a group of line segments (candidates of branch track) included in each of the fan-shaped search regions S, a line segment where an average value of features is equal to or above the certain value is detected. In this case, however, the branch track detection unit 10d may utilize a degree of similarity to the railway track R detected by the railway track detection unit 10c. The railway track R detected by the railway track detection unit 10c and the branch track SR that the branch track detection unit 10d is about to detect are coupled with each other. Therefore, it is conceivable that features of the railway track R and the branch track SR in the image 1100 have many similarities. As described above, use of a degree of similarity (similar feature) to the railway track R can contribute to reduce processing burdens for detecting the branch track SR, can narrow down a search standard, and can more accurately detect the branch track SR.

As illustrated in FIG. 11, when the branch track detection unit 10d executes a search in each of the fan-shaped search regions S, and detects an initial branch part of the branch track SR, the railway track detection unit 10c executes processing of detecting (a part of) the railway track R in areas subsequent from the initial area A1, as described with reference to FIG. 4. As a result, the branch track SR can wholly be detected. The branch track detection unit 10d further executes branch track detection processing of detecting a branch track for the railway track R (the branch track SR) detected by the railway track detection unit 10c. That is, the branch track detection processing is repeatedly executed on all branch positions to be detected. As a result, all the branch tracks SR that are present in a captured image (a bird's-eye view image, such as the image 1100) serving as a present processing target can be accurately detected.

In the embodiment described above, such an example has been described that the branch track detection unit 10d uses such a fan-shaped search region as illustrated in FIGS. 5 and 6 to execute detection for a line segment indicative of (a part of) the branch track SR. In another example, another method such as Hough transform may be used to detect a line segment indicative of (a part of) the branch track SR. In this case, a search region can be set, as illustrated in FIG. 12, on the basis of a search range (the line segment RC-RD) added with a margin as described in FIG. 10. For example, as for the branch track SR photographed in an image 1200, an intersection on an upper end of the line segment 801 detected by the branch track detection unit 10d is present closer to a right side than an intersection on a lower end. That is, the branch track SR is supposed to be curved and branched rightward. In this case, the branch track detection unit 10d adds, for example, to either the coordinate point RC or the coordinate point RD, whichever is present closer to the right side (for example, the coordinate point RD) a predetermined length (that is set beforehand through experiments, for example) in an x direction (rightward) of the image 1200 to set a coordinate point RE. Then, a coordinate point RF is set at a position of an x coordinate, identically to the coordinate point RE, and a y coordinate, identically to the coordinate point RC. Then, the coordinate points RC, RD, RE, and RF form a region P serving as a detection region when Hough transform is to be executed. As described above, setting the region P allows to efficiently execute Hough transform on a region where the branch track SR is supposed to be present.

Now back to FIG. 2, the obstruction detection device 16 detects whether there is an obstruction on the railway track R detected by the railway track identification device 10, the obstruction needing to be watched (a remarkable object) when the railway vehicle RV travels on the railway track R, and causes the display unit 14, for example, to display a result of detection.

The determination region identification unit 16a identifies, on the basis of a result of detection by the railway track detection unit 10c and a result of detection by the branch track detection unit 10d, regions around the railway track R within the captured image, as determination regions serving as targets for identifying whether an obstruction (a remarkable object) is present. Therefore, the railway track detection unit 10c and the branch track detection unit 10d function as railway track detection result output units that output respective results of detection to the obstruction detection device 16.

The obstruction detection unit 16b monitors (detects) whether a remarkable object is present in the determination regions identified by the determination region identification unit 16a. Information (a template) used for determining whether there is a remarkable object is stored, as the obstruction information 16e, in the storage unit 16d. The obstruction detection unit 16b determines, on the basis of the obstruction information 16e and the feature data detected by the feature acquisition unit 10b, whether a group of pixels, which match with the template of one of obstructions (objects that need to be watched), are present in the determination regions.

Then, when the obstruction detection unit 16b determines that an obstruction (a remarkable object) is present, the output control unit 16c reads out, from the obstruction information 16e, an image indicative of a remarkable object be watched (a mark, an icon, a symbol, or a character, for example), which corresponds to the obstruction. Then, the output control unit 16c executes, for example, processing of displaying in a superimposed manner the image indicative of the object that needs to be watched at a corresponding position on the image (the actual image in which the railway track R and the branch track SR, for example, are photographed) displayed on the display unit 14 to output a warning. Note that, in this case, a voice or an alarm may be output in addition to the warning.

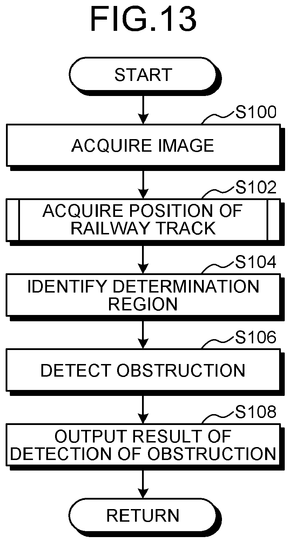

Operation of the vehicle system 100 including the railway track identification device 10 configured as described above will be described with reference to the flowcharts in FIGS. 13 to 15.

FIG. 13 is an exemplary flowchart illustrating an overall flow of processing to be executed by the vehicle system 100 including the railway track identification device 10 according to the first embodiment. The processing flow illustrated in FIG. 13 is to be repeatedly executed while the railway vehicle RV is traveling.

In the processing flow illustrated in FIG. 13, the image acquisition unit 10a of the railway track identification device 10 first acquires, at S 100, a captured image from the camera 12. Note that the image acquisition unit 10a converts the acquired captured image into a bird's-eye view image.

Then, at S 102, the railway track identification device 10 causes the feature acquisition unit 10b, the railway track detection unit 10c, and the branch track detection unit 10d to execute the processing described with reference to FIGS. 3 to 11 (FIG. 12) to detect the railway track R and the branch track SR, that is, to acquire positions of railway tracks.

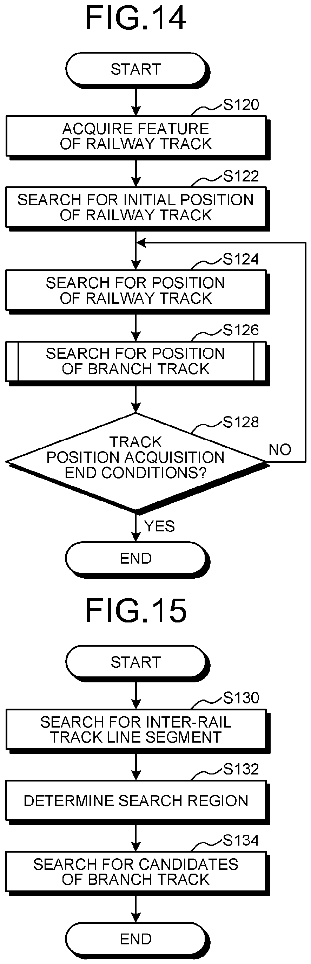

Specifically, as illustrated in the flowchart in FIG. 14, at S 120, the feature acquisition unit 10b acquires a feature of the railway track R, which represents similarity to a railway track at pixels in the bird's-eye view image serving as a search target. For example, FIG. 3 illustrates an example of calculating edge strength in an image (a bird's-eye view image) in which a scene in front of the railway vehicle RV is captured.

Next, at S 122, the railway track detection unit 10c detects, as described in FIG. 3, a part of the railway track R (the rails 301L and 301R) on which the vehicle itself (the railway vehicle RV) travels, from the initial area A1 serving as a first detection target, in a plurality of groups of pixels (areas) included in the image 300. Note that, as another implementation example, in a region on the near side of the image 300, a shape of the railway track R on which the railway vehicle RV travels can be limited. To this end, the storage unit 10e may be caused to store beforehand, as the railway track information 10f, a shape pattern of the railway track R. Processing of performing matching with the shape pattern may then be executed to detect the railway track R seen on the near side of the image 300 (the railway track R in the initial area A1).

Then, at S124, the railway track detection unit 10c uses the method described with reference to FIGS. 4 to 6 to sequentially execute, on the basis of the initial position of the railway track R, which has been detected at S122, a search for (detection for) the railway track R, from the near side (the lower side) to the far side (the upper side) of the image 400.

Next, at S126, the branch track detection unit 10d executes, with respect to the railway track R detected at S124, in accordance with the procedure described with reference to FIGS. 7 to 11 (FIG. 12), detection for the branch track SR (a position of the branch track SR; a branch position).

The processing at S126 will be described with reference to the flowchart in FIG. 15. The branch track detection unit 10d first uses, at S130, as described in FIG. 7, a fan-shaped search region to execute a search for an inter-railway track line segment (the line segment 801 in FIG. 8). Note that, during a search for an inter-railway track line segment, a plurality of line segments may be detected. In this case, for example, branch positions of railway tracks are supposed to lie adjacent to each other. In this case, it is sufficient that processing described in steps below be executed per the detected inter-railway track line segments.

Next, at S132, the branch track detection unit 10d determines, on the basis of the inter-railway track line segment (the line segment 801) detected at S130, a search range (a region) for the branch track SR, as described in FIGS. 9 and 10 (or FIG. 12).

Then, at S134, as described with FIG. 11, the branch track detection unit 10d executes a search in a fan-shaped search region by using candidates of branch track with respect to the search range (the region) for the branch track SR determined at S132, and detects (a part of) the branch track SR that matches with one of the candidates of branch track.

Now back to the flowchart in FIG. 14, at S128, the railway track detection unit 10c and the branch track detection unit 10d determine whether end conditions for detecting the railway track R and the branch track SR are satisfied. It is conceivable that the end conditions include that, for example, the number of times the railway track detection unit 10c and the branch track detection unit 10d have repeated the detection processing is equal to or above a predetermined number, and an end of (a part of) the railway track R, which has been identified last time by the railway track detection unit 10c, lies closer to the upper end than a predetermined position in a bird's-eye view image.

At S 128, when it is determined that the end conditions have not yet been satisfied (No at S128), (a part of) the railway track R remains undetected. Therefore, in this case, the processing returns to S 124, and detection for (a part of) the railway track R or (a part of) the branch track SR is further repeated from a next area.

On the other hand, at S 128, when it is determined that the end conditions have been satisfied (Yes at S128), (a part of) the railway track R or (a part of) the branch track SR does not remain undetected. Therefore, in this case, it is determined that the detection processing for the railway track R and the branch track SR on the present image (the bird's-eye view image) has been completed. The railway track search processing then once ends. Information regarding the railway track R and the branch track SR being detected is stored in the storage unit 10e.

Now back to the flowchart in FIG. 13, after the railway track identification device 10 has completed detection of the railway track R and the branch track SR on the image (the bird's-eye view image) serving as the present processing target, the determination region identification unit 16a of the obstruction detection device 16 sets, at S 104, determination regions around the railway track R (the branch track SR), which serve as targets for determining whether there is an obstruction (a remarkable object).

Then, at S 106, the obstruction detection unit 16b of the obstruction detection device 16 determines whether an obstruction is present in the determination regions identified at S104.

When it is determined that an obstruction is present, at S 108, it is necessary that a driver of the railway vehicle RV be notified that the obstruction is present to attract a driver's attention. Therefore, in this case, at S 108, the output control unit 16c of the obstruction detection device 16 reads an image indicative of a remarkable object (a mark, an icon, a symbol, or a character, for example), which corresponds to the obstruction, from the obstruction information 16e, for example. Then, the output control unit 16c executes, for example, processing of displaying in a superimposed manner the image indicative of the object that needs to be watched at a corresponding position on the image (the actual image in which the railway track R and the branch track SR, for example, are photographed) displayed on the display unit 14 to output a warning. Then, the series of the processing on the processing target image ends. Note that, when no obstruction is found, it is not necessary to attract a driver's attention. Therefore, in this case, the display unit 14 displays a present image (an actual image) captured by the camera 12.

As described above, with the vehicle system 100 according to the first embodiment, the railway track identification device 10 executes accurate identification (detection) regarding not only the railway track R on which the vehicle itself (the railway vehicle RV) travels, but also the branch track SR branching off from the railway track R. As a result, obstruction detection processing for the railway track R and the branch track SR that are present in an image serving as a present processing target can be highly accurately executed, achieving improved reliability and improved usability of the vehicle system 100, for example.

### <Second Embodiment>

In the first embodiment described above, such an example has been described that, for an image (a bird's-eye view image) serving as a detection target, a whole range is targeted for detection. As a result, detection failure can be reduced, achieving highly reliable detection of the railway track R (the branch track SR), as well as achieving highly reliable detection of an obstruction.

By the way, the railway vehicle RV undergoes detailed operation control. Therefore, the vehicle system 100 can acquire in advance information regarding a direction in which the railway track R (the branch track SR) on which the railway vehicle itself will travel heads for, among the railway tracks R (the branch tracks SR) photographed in an image (a bird's-eye view image) serving as a detection target. To this end, the vehicle system 100 limits, on the basis of a position and operation information of the vehicle itself (the railway vehicle RV), for example, the railway track R (the branch track SR) on which the vehicle itself (the railway vehicle RV) will travel, to execute the railway track identification processing and the obstruction detection processing described in the first embodiment. As a result, the vehicle system 100 can achieve more accurate railway track identification processing and obstruction detection processing, as well as can further achieve reduced processing burdens and a shortened processing time.

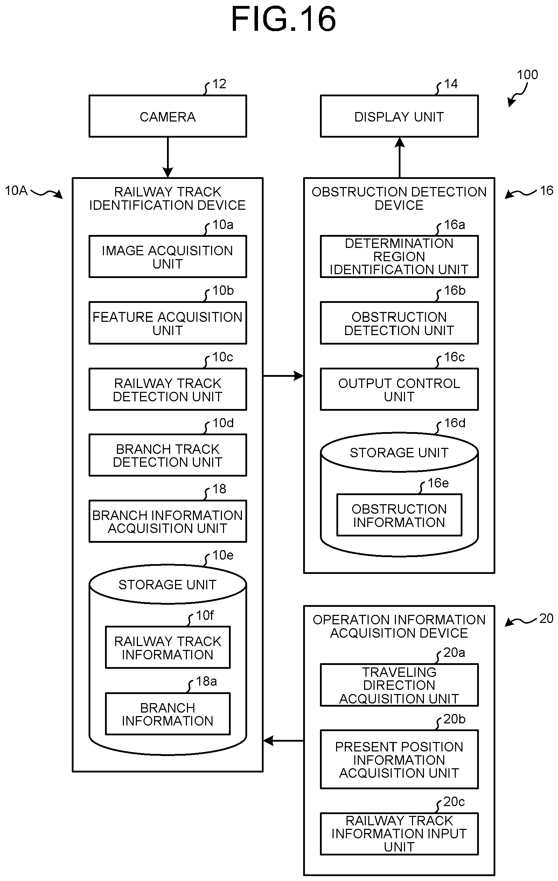

FIG. 16 is an exemplary schematic block diagram illustrating functionality of a railway track identification device 10A and an obstruction detection device 16 according to a second embodiment. Note that, as illustrated in FIG. 16, the railway track identification device 10A according to the second embodiment can take a configuration identical to the configuration of the railway track identification device 10 according to the first embodiment illustrated in FIG. 2, except that a branch information acquisition unit 18 and branch information 18a that the storage unit 10e stores are added. A configuration of the obstruction detection device 16 according to the second embodiment is identical to the configuration of the obstruction detection device 16 according to the first embodiment. Therefore, in the second embodiment, like reference numerals designate components each having a configuration and functionality substantially identical to the configuration and functionality of each of the components of the first embodiment. Detailed descriptions of the respective components are thus omitted. The vehicle system 100 according to the second embodiment includes an operation information acquisition device 20.

The operation information acquisition device 20 can include such a device that acquires an absolute position, such as a global navigation satellite system (GNSS) or a global positioning system (GPS). The operation information acquisition device 20 may also include such a device that can acquire a travel distance, such as a tachogenerator (TG). The operation information acquisition device 20 includes functional modules such as a traveling direction acquisition unit 20a, a present position information acquisition unit 20b, and a railway track information input unit 20c. The group of functional modules are partially or wholly implemented by collaboration between hardware and software. For example, each of the functional modules is implemented by that a processor of the operation information acquisition device 20 reads and executes a computer program stored in a memory such as a storage unit. In another example, the group of functional modules may be partially or wholly implemented with dedicated hardware (a circuit).

The traveling direction acquisition unit 20a acquires information of the traveling direction (inbound or outbound) of the vehicle itself (the railway vehicle RV). The traveling direction may be acquired from a higher system, or may be acquired manually. The present position information acquisition unit 20b acquires "working kilometers" serving as guides indicative of particular positions set on the railway track R. The railway track information input unit 20c accepts an entry of railway track information.

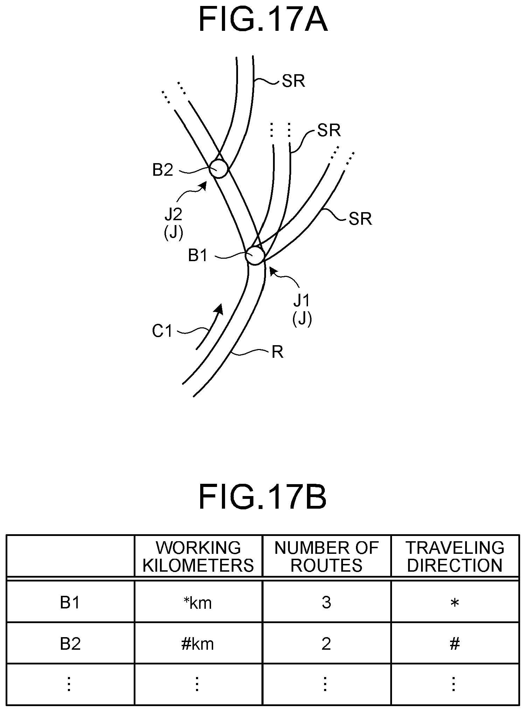

The branch information 18a stored in the storage unit 10e of the railway track identification device 10A represents a database indicating branch information and traveling directions based on working kilometers, as illustrated in FIGS. 17A and 17B. FIGS. 17A and 17B are exemplary schematic views illustrating an example of branches J and the branch information 18a regarding the branches J. For example, in a case where two branches J1 and J2 are present on the railway track R, as illustrated in FIG. 17A, the branch information 18a is stored in the storage unit 10e as the branch information 18a in such a table format as illustrated in FIG. 17B. The branch information 18a illustrated in FIG. 17B stores a correspondence relation among "working kilometers" indicative of positions of a point B1 where the branch J1 is present and a point B2 where the branch J2 is present, as information indicative of whether a branch (the branch track SR) is present, a "number of routes" indicative of the number of the railway tracks R (the number of the branch tracks SR) branched at the branches J1 and J2, and information regarding the traveling direction (a branch destination) indicative of that the railway vehicle RV selects which route at the branches J1 and J2. Note that it is presumed that, as for the "number of routes", the railway vehicle RV will travel in a direction of an arrow C1, in the example illustrated in FIG. 17A. The "traveling direction" is determined on the basis of utility information regarding utility of the railway track RL, and operation information such as an operation diagram of the railway vehicle RV, for example. That is, the branch information 18a varies depending on information acquired (entered) by the traveling direction acquisition unit 20a and the railway track information input unit 20c, for example.

The branch information acquisition unit 18 acquires, by referring the branch information 18a, information about the branch tracks SR in an image (a bird's-eye view image) serving as a present processing target (for example, information about branch positions, the number of branches, and traveling directions) on the basis of information of a present position of the railway vehicle RV, which is to be acquired by the operation information acquisition device 20. The railway track detection unit 10c and the branch track detection unit 10d of the railway track identification device 10A can limitedly execute, on the basis of the information acquired by the branch information acquisition unit 18, railway track detection processing on the image (the bird's-eye view image) serving as the processing target.

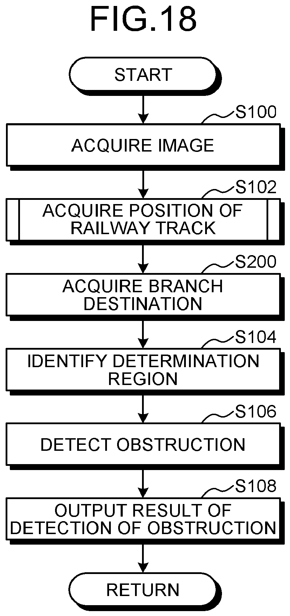

FIG. 18 is an exemplary flowchart illustrating a flow of processing to be executed by the vehicle system 100 including the railway track identification device 10A according to the second embodiment. Note that the flowchart is identical to the flowchart according to the first embodiment illustrated in FIG. 13, except that the railway track detection processing is executed, on the basis of information acquired by the branch information acquisition unit 18, in a limited region on an image (a bird's-eye view image) serving as a processing target. Like step numbers designate substantially identical processing components. Detailed descriptions are thus omitted.

In the processing flow illustrated in FIG. 18, the image acquisition unit 10a of the railway track identification device 10A first acquires, at S 100, a captured image from the camera 12. Note that the image acquisition unit 10a converts the acquired, captured image into a bird's-eye view image.

Then, at S102, the railway track identification device 10A follows the processing flows in FIGS. 14 and 15 to cause the feature acquisition unit 10b, the railway track detection unit 10c, and the branch track detection unit 10d to execute the processing described with reference to FIGS. 3 to 11 (FIG. 12) to detect the railway track R and the branch track SR, that is, to acquire a branch position of the branch track SR.

Next, at S200, the branch track detection unit 10d executes search processing for the branch track SR in the direction that is acquired by the branch information acquisition unit 18, and in which the vehicle itself (the railway vehicle RV) is scheduled to travel, to acquire the branch track SR that is a branch destination. For example, in a case where there are branches in three directions, searches for the branch track SR with respect to regions where other railway tracks than the railway track on which the vehicle itself (the railway vehicle RV) is scheduled to travel are possibly present are thus omitted. As a result, a shortened processing time and reduced processing burdens with respect to a processing target image can be achieved. Note that the branch track detection unit 10d can limit, on the basis of branch information that the branch information acquisition unit 18 acquires, a region where a railway track on which the vehicle itself is scheduled to travel is possibly present, for example, setting a reduced search range (the line segment RC-RD), as described with reference to FIG. 10. In this respect, the present invention also contributes to efficient detection processing and reduced burdens.

In a case where the branch track SR on which the vehicle itself (the railway vehicle RV) is scheduled to travel is acquired (detected), at S200, the determination region identification unit 16a of the obstruction detection device 16 sets, at S 104, determination regions around the branch track SR, which serve as targets for determining whether there is an obstruction (a remarkable object). That is, a more limited range than the determination regions in the first embodiment can be set.

Then, at S106, the obstruction detection unit 16b of the obstruction detection device 16 determines whether an obstruction is present or not in the determination region identified and limited at S104.

In a case where it is determined that an obstruction is present, at S108, the output control unit 16c executes, for example, processing of displaying in a superimposed manner an image indicative of a remarkable object (a mark, an icon, a symbol, or a character, for example) at a corresponding position on the image (the actual image in which the railway track R and the branch track SR, for example, are photographed) displayed on the display unit 14, for example, to output a warning. Then, the series of the processing on the processing target image ends. Note that, in this case, a voice or an alarm may be output, in addition to the warning. When no obstruction is found, it is not necessary to attract a driver's attention. Therefore, in this case, the display unit 14 displays a present image (an actual image) captured by the camera 12.

As described above, with the vehicle system 100 according to the second embodiment, the railway track R (the branch track SR) on which the vehicle itself (the railway vehicle RV) will travel can be limited on the basis of a position and operation information, for example, of the vehicle itself (the railway vehicle RV) to execute the railway track identification processing and the obstruction detection processing. As a result, more accurate railway track identification processing and obstruction detection processing can be achieved, further achieving reduced processing burdens and a shortened processing time.

Although the embodiments of the present invention have been described above, the embodiments described above and their modification examples are mere examples, and do not intend to limit the scope of the present invention. The embodiments described above can be implemented in various aspects, and can be variously omitted, replaced, and altered without departing from the scope of the present invention. The embodiments described above and their modifications still fall within the scope of the present invention, as well as still fall within the scope of the present invention described in the claims.

## Claims

1. A railway track identification device (10) comprising:
an image acquisition unit (10a) configured to acquire a captured image acquired by capturing an image of a region lying in a traveling direction (D) of a railway vehicle (RV);
a railway track detection unit (10c) configured to detect, for each of a plurality of groups of pixels in the captured image, a railway track on a basis of a feature amount, the feature amount being based on a predetermined standard and representing similarity to a railway track;
a branch track detection unit (10d) configured to detect whether there is a branch track branching off from the railway track being detected; and
a railway track detection result output unit (10c, 10d) configured to output a result of detection by the railway track detection unit (10c) and a result of detection by the branch track detection unit (10d), wherein
the branch track detection unit (10d) acquires, as a branch position of the branch track, an intersection between the branch track and the railway track detected by the railway track detection unit (10c);
**characterized in that**
the branch track detection unit (10d) sets a fan-shaped search region and detects the branch track by using the branch position as a pivot of the fan-shaped search region.

2. The railway track identification device according to claim 1, wherein the branch track detection unit (10d) repeatedly executes branch track detection processing of detecting the branch track, the branch track detection processing being executed on all the branch positions detected on the railway track detected by the railway track detection unit (10c).

3. The railway track identification device according to any one of claims 1 or 2, wherein the branch track detection unit (10d) acquires, as the branch track, a line segment intersecting the railway track detected by the railway track detection unit (10c).

4. The railway track identification device according to claim 3, wherein the branch track detection unit (10d) sets a fan-shaped search region for the branch track, the fan-shaped search region starting at the branch position being detected, the fan-shaped search region being set at an angle covering a range of a maximum curvature that the branch track is able to take on a basis of the line segment.

5. The railway track identification device according to any one of claims 1 to 4, wherein the branch track detection unit (10d) detects the branch track on a basis of a degree of similarity to the railway track detected by the railway track detection unit.

6. The railway track identification device according to any one of claims 1 to 5, further comprising a branch information acquisition unit (18) configured to acquire branch information including at least one of: presence or absence of the branch track included in a region corresponding to an imaging region of the captured image acquired at a present position of the railway vehicle (RV); a number of the branch tracks; and a branch destination to which the railway vehicle (RV) travels,
wherein the branch track detection unit (18) identifies, on a basis of the branch information, the branch track on which the railway vehicle (RV) travels.

7. The railway track identification device according to claim 6, wherein the branch track detection unit (10d) sets a search region for the branch track, on a basis of branch information acquired by the branch information acquisition unit (18).

## Patentansprüche

1. Eine Eisenbahngleis-Identifizierungsvorrichtung (10) , umfassend:
eine Bilderfassungseinheit (10a), die so konfiguriert ist, dass sie ein Aufnahmebild erfasst, das durch Aufnehmen eines Bildes eines in einer Fahrtrichtung (D) eines Schienenfahrzeugs (RV) liegenden Bereichs erfasst wird;
eine Erkennungseinheit (10c) für Eisenbahngleise, die so konfiguriert ist, dass sie für jede einer Vielzahl von Gruppen von Pixeln in dem aufgenommenen Bild ein Eisenbahngleis auf der Grundlage eines Merkmalsbetrags erkennt, wobei der Merkmalsbetrag auf einem vorbestimmten Standard basiert und eine Ähnlichkeit mit einem Eisenbahngleis darstellt;
eine Erkennungseinheit (10d) für Abzweiggleise, die so konfiguriert ist, dass sie erkennt, ob es ein Abzweiggleis gibt, das von dem erkannten Eisenbahngleis abzweigt; und
eine Eisenbahngleis-Erkennungsergebnis-Ausgabeeinheit (10c, 10d), die so konfiguriert ist, dass sie ein Ergebnis der Erkennung durch die Eisenbahngleis-Erkennungseinheit (10c) und ein Ergebnis der Erkennung durch die Abzweiggleis-Erkennungseinheit (10d) ausgibt, wobei
die Abzweiggleiserfassungseinheit (10d) als eine Abzweigposition des Abzweiggleises einen Schnittpunkt zwischen dem Abzweiggleis und dem Eisenbahngleis erfasst, der von der Eisenbahngleiserfassungseinheit (10c) erkannt wird, **dadurch gekennzeichnet,**
**dass** die Abzweiggleis-Erkennungseinheit (10d) einen fächerförmigen Suchbereich festlegt und das Abzweiggleis erkennt, indem sie die Abzweigposition als Drehpunkt des fächerförmigen Suchbereichs verwendet.

2. Eisenbahngleis-Identifizierungsvorrichtung nach Anspruch 1, wobei die Erkennungsvorrichtung für Abzweiggleise (10d) wiederholt eine Verarbeitung zur Erkennung des Abzweiggleises ausführt, wobei die Verarbeitung zur Erkennung des Abzweiggleises an allen Abzweigpositionen ausgeführt wird, die auf dem von der Erkennungsvorrichtung für Eisenbahngleise (10c) erkannten Eisenbahngleis erkannt wurden.

3. Eisenbahngleis-Identifizierungsvorrichtung nach einem der Ansprüche 1 oder 2, wobei die Erkennungseinheit (10d) für Abzweiggleise ein Liniensegment als Abzweiggleis erfasst, das das Eisenbahngleis schneidet, das von der Erkennungseinheit (10c) für Eisenbahngleise erkannt wurde.

4. Eisenbahngleis-Identifizierungsvorrichtung nach Anspruch 3, wobei die Abzweiggleiserkennungseinheit (10d) einen fächerförmigen Suchbereich für das Abzweiggleis einstellt, wobei der fächerförmige Suchbereich an der erkannten Abzweigposition beginnt, wobei der fächerförmige Suchbereich in einem Winkel eingestellt ist, der einen Bereich einer maximalen Krümmung abdeckt, die das Abzweiggleis auf der Grundlage des Liniensegments einnehmen kann.

5. Eisenbahngleis-Identifizierungsvorrichtung nach einem der Ansprüche 1 bis 4, wobei die Erkennungseinheit (10d) für Abzweiggleise das Abzweiggleis auf der Grundlage eines Ähnlichkeitsgrades mit dem von der Erkennungseinheit für Eisenbahngleise erkannten Eisenbahngleis erkennt.

6. Eisenbahngleis-Identifizierungsvorrichtung nach einem der Ansprüche 1 bis 5, die ferner eine Erfassungseinheit (18) für Abzweiginformationen umfasst, die so konfiguriert ist, dass sie Abzweiginformationen erfasst, die mindestens eines der folgenden Elemente enthalten: Vorhandensein oder Nichtvorhandensein des Abzweiggleises, das in einem Bereich umfasst ist, der einem Abbildungsbereich des Aufnahmebildes entspricht, das an einer aktuellen Position des Eisenbahnfahrzeugs (RV) erfasst wurde; eine Anzahl der Abzweiggleise; und ein Abzweigziel, zu dem das Eisenbahnfahrzeug (RV) fährt,
wobei die Erkennungseinheit (18) für Abzweiggleise auf der Grundlage der Abzweiginformationen das Abzweiggleis erkennt, auf dem das Schienenfahrzeug (RV) fährt.

7. Eisenbahngleis-Identifizierungsvorrichtung nach Anspruch 6, wobei die Abzweiggleis-Erfassungseinheit (10d) einen Suchbereich für das Abzweiggleis auf der Grundlage von Abzweiginformationen festlegt, die von der Erfassungseinheit (18) für Abzweiginformationen erfasst werden.

## Revendications

1. Dispositif d'identification de voie ferrée (10) comprenant :
une unité d'acquisition d'image (10a) configurée pour acquérir une image capturée acquise en capturant une image d'une région située dans une direction de déplacement (D) d'un véhicule ferroviaire (RV) ;
une unité de détection de voie ferrée (10c) configurée pour détecter, pour chacun d'une pluralité de groupes de pixels dans l'image capturée, une voie ferrée sur une base d'une quantité de caractéristiques, la quantité de caractéristiques étant basée sur une norme prédéterminée et représentant une similitude avec une voie ferrée ;
une unité de détection de voie d'embranchement (10d) configurée pour détecter si une voie d'embranchement bifurquant de la voie ferrée est détectée ; et
une unité de sortie de résultat de détection de voie ferrée (10c, 10d) configurée pour sortir un résultat de détection par l'unité de détection de voie ferrée (10c) et un résultat de détection par l'unité de détection de voie d'embranchement (10d), dans lequel
l'unité de détection de voie d'embranchement (10d) acquiert, en tant que position d'embranchement de la voie d'embranchement, une intersection entre la voie d'embranchement et la voie ferrée détectée par l'unité de détection de voie ferrée (10c) ;
**caractérisé en ce que**
l'unité de détection de voie d'embranchement (10d) définit une région de recherche en forme d'éventail et détecte la voie d'embranchement en utilisant la position d'embranchement comme pivot de la région de recherche en forme d'éventail.

2. Dispositif d'identification de voie ferrée selon la revendication 1, dans lequel l'unité de détection de voie d'embranchement (10d) met en oeuvre de manière répétée un traitement de détection de voie d'embranchement consistant à détecter la voie d'embranchement, le traitement de détection de voie d'embranchement étant mis en oeuvre sur toutes les positions d'embranchement détectées sur la voie ferrée détectée par l'unité de détection de voie ferrée (10c).

3. Dispositif d'identification de voie ferrée selon l'une quelconque des revendications 1 ou 2, dans lequel l'unité de détection de voie d'embranchement (10d) acquiert, en tant que voie d'embranchement, un segment de ligne coupant la voie ferrée détecté par l'unité de détection de voie ferrée (10c).

4. Dispositif d'identification de voie ferrée selon la revendication 3, dans lequel l'unité de détection de voie d'embranchement (10d) définit une région de recherche en forme d'éventail pour la voie d'embranchement, la région de recherche en forme d'éventail commençant au niveau de la position d'embranchement détectée, la région de recherche en forme d'éventail étant définie selon un angle couvrant une plage d'une courbure maximale que la voie d'embranchement peut prendre sur une base du segment de ligne.

5. Dispositif d'identification de voie ferrée selon l'une quelconque des revendications 1 à 4, dans lequel l'unité de détection de voie d'embranchement (10d) détecte la voie d'embranchement sur une base d'un degré de similitude avec la voie ferrée détectée par l'unité de détection de voie ferrée.

6. Dispositif d'identification de voie ferrée selon l'une quelconque des revendications 1 à 5, comprenant en outre une unité d'acquisition d'informations d'embranchement (18) configurée pour acquérir des informations d'embranchement incluant au moins l'un parmi la présence ou l'absence de la voie d'embranchement incluse dans une région correspondant à une région d'imagerie de l'image capturée acquise au niveau d'une position actuelle du véhicule ferroviaire (RV) ; un nombre de voies d'embranchement ; et une destination d'embranchement vers laquelle le véhicule ferroviaire (RV) se déplace,
dans lequel l'unité de détection de voie d'embranchement (18) identifie, sur une base des informations d'embranchement, la voie d'embranchement sur laquelle se déplace le véhicule ferroviaire (RV).

7. Dispositif d'identification de voie ferrée selon la revendication 6, dans lequel l'unité de détection de voie d'embranchement (10d) définit une région de recherche pour la voie d'embranchement, sur une base d'informations d'embranchement acquises par l'unité d'acquisition d'informations d'embranchement (18).
